# EUROPEAN PATENT SPECIFICATION

(11) **EP 3 627 405 B1**
(45) Date of publication and mention of the grant of the patent: **31.12.2025**
(21) Application number: 18802227.1
(22) Date of filing: 08.05.2018
(51) Int. Cl.: F24F 11/30, G06Q 10/08, G06Q 10/20, G06Q 10/00, F24F 11/62, G06V 20/00, G06V 10/764, G06T 7/00, G06Q 10/0875

(54) **PRODUCT INFORMATION GENERATING SYSTEM**
PRODUKTINFORMATIONERZEUGUNGSSYSTEM
SYSTÈME DE GÉNÉRATION D'INFORMATIONS DE PRODUIT

(30) Priority: 15.05.2017 JP 2017096475
(43) Date of publication of application: 25.03.2020
(73) Proprietor: Daikin Industries, Ltd., Osaka-shi, Osaka 530-0001 (JP)
(72) Inventor: NARITAKE, Tsuyoshi, Osaka 530-8323 (JP); IWAO, Kazuaki, Osaka 530-8323 (JP)
(74) Representative: Conti, Marco
(86) International application number: PCT/JP2018/017818
(87) International publication number: WO 2018/212022

(56) References cited:
- WO-A1-2011/083732
- WO-A1-2011/083732
- JP-A- 2013 222 335
- JP-A- H08 121 888
- US-A1- 2013 136 304
- US-A1- 2015 295 803
- US-B1- 8 818 031

## Description

### TECHNICAL FIELD

The present invention relates to an information preparation system for preparing product information on a target product, which contains information on a position where the target product is installed.

### BACKGROUND ART

As disclosed in the Patent Literature 1 (JP 2005-196341 A), a remote management system that collects information on operating states and abnormal events of the products that is connected to the remote management system via a network is known in the related art.

Using this system, for example, a maintenance service provider for the products can appropriately suggest to perform maintenance of the products of which the management is commissioned, that is, the products registered in the system.

WO 2011/083732 A1 discloses an information processing system that creates relevant information, marketing information, and the like on the basis of evaluation of specific objects that receive attention in scenes. The information processing system can evaluate search requests from a plurality of users in accordance with scenes in terms of specific objects recognized in accordance with image search requests.

US 2013/136304 A1 discloses a human object recognition unit that recognizes a human object included in a captured image data. A degree-of-interest estimation unit estimates a degree of interest of the human object in acquiring information, based on a recognition result obtained by the human object recognition unit. An information acquisition unit acquires information as a target to be presented to the human object.

US 2015/295803 A1 discloses a remote maintenance system including a remote maintenance server configured to remotely control facilities, and a service center server configured to receive information on an abnormal facility among the facilities from the remote maintenance server, and perform service registration based on the information on the abnormal facility.

### SUMMARY OF THE INVENTION

### <Technical Problem>

The maintenance service provider is capable of making a suggestion to perform maintenance of products of which the management is previously commissioned, that is, a product registered in the system, but is incapable of making a suggestion to perform maintenance of products of which the management is not commissioned, that is, a product that is not registered in the system and is not recognized as to its presence. If a place where a product is used can be identified through, for example, a field investigation by humans, it is possible to make a suggestion to perform maintenance of the product that is not registered in the system. According to this method, however, it is difficult to efficiently identify a place where a product is used and an omission of investigation tends to happen.

The subject of the present invention is providing a product information preparation system that readily locates a product even when the management of the product is not previously commissioned, and readily makes, for example, a suggestion to perform maintenance of the product.

### <Solutions to Problem>

According to a first aspect of the present invention, a product information preparation system includes an acquisition unit, a recognition unit, and a preparation unit. The acquisition unit acquires image data on a landscape, the image data being correlated with position information. The recognition unit recognizes an image of a target product in the image data acquired by the acquisition unit. The preparation unit identifies a position where the target product recognized by the recognition unit is installed, based on the position information correlated with the image data and to prepare product information on the target product, the product information containing information on the position where the target product is installed.

With this configuration, it is possible to make a suggestion to perform maintenance of a product not previously subscribing to, for example, a maintenance service, that is, an unregistered product, using product information containing information on a position where the target product is installed, the product information being prepared based on image data without a necessity of field investigation by humans. The use of the product information preparation system therefore enables enticement of potential customers for the maintenance service. In addition, the product information preparation system allows a user of the product to receive the suggestion about maintenance without previous subscription to, for example, the maintenance service. The product information preparation system therefore readily keeps the used target product in an appropriate state and provides the user of the product with high convenience.

According to a second aspect of the present invention, in the product information preparation system according to the first aspect, the image data includes an image of a landscape captured from above and/or an image of a landscape captured sidewise.

With this configuration, it is possible to prepare the product information based on, for example, an image of a landscape captured from above, such as an aerial photographic image or a satellite image, and an image of a landscape captured sidewise, such as a ground photographic image or a street view-type photographic image.

More preferably, the image data contains both of the image of the landscape captured from above and the image of the landscape captured sidewise. Since the image data contains the images that are different in image capturing angle from each other, the product information preparation system finds a product that cannot be recognized or is less likely to be recognized from one of the images, from the other image, and reduces a possibility of omission of an investigation for locating a product.

According to a third aspect of the present invention, in the product information preparation system according to the first or second aspect, the recognition unit recognizes the image of the target product in the image data, based on at least one of an appearance of the target product and a recognition indication provided on the target product.

Examples of the recognition indication on the target product may include, but not limited to, a logo, and a label or plate on which information on product specifications is inscribed.

With this configuration, it is possible to accurately find the image of the target product in the image data because the image of the target product in the image data is recognized, based on the appearance of the target product or the recognition indication on the target product.

According to a fourth aspect of the present invention, in the product information preparation system according to any of the first to third aspects, the preparation unit prepares a product installation position distribution map as the product information containing the information on the position where the target product is installed.

In this configuration, the system prepares the product installation position distribution map, that is, a map indicating the position where the target product is installed. The use of the product installation position distribution map allows a user to visually and readily grasp the position where the target product is installed. Therefore, a sales representative of a maintenance service provider can readily utilize the product installation position distribution map for his/her sale activities.

According to a fifth aspect of the present invention, in the product information preparation system according to any of the first to fourth aspects, the recognition unit recognizes the image of the target product in the image data with differentiating at least one of items including a maker, a model, and a year of manufacture. The preparation unit prepares the product information on the target product classified according to at least one of the items.

The product information preparation system does not simply recognize the presence of the target product, but recognize the target product with differentiating the target product by at least one of the items including the maker, the model and the year of manufacture, and prepares the product information on the target product classified according to at least one of the items. The product information preparation system therefore allows a person who suggests the maintenance service to readily make an appropriate suggestion about maintenance or update.

According to a sixth aspect of the present invention, in the product information preparation system according to any of the first to fifth aspects, the target product is a device constituting at least a part of a refrigeration apparatus that causes refrigerant to circulate through a refrigerant circuit. The recognition unit recognizes the image of the target product in the image data with differentiating the refrigerant used in the target product. The preparation unit prepares the product information on the target product classified according to the refrigerant.

Examples of the refrigeration apparatus may include an air conditioner and a hot water supply apparatus using a heat pump. Examples of the device as the target product may include an outdoor unit of the air conditioner and a heat source unit of the hot water supply apparatus.

The product information preparation system does not simply recognize the presence of the constitution device of the refrigeration apparatus, as the target product, but recognize the constitution device with differentiating the device by the used refrigerant and prepares the product information on the target product classified according to the used refrigerant. The product information preparation system therefore allows the person who suggests the maintenance service to readily make the appropriate suggestion about maintenance or update.

According to a seventh aspect of the present invention, in the product information preparation system according to any of the first to sixth aspects, the recognition unit recognizes the image of the target product in the image data with differentiating a deterioration level. The preparation unit prepares the product information on the target product classified according to the deterioration level.

The product information preparation system does not simply recognize the presence of the target product, but recognize the target product with differentiating the target product by the deterioration level and prepares the product information on the target product classified according to the deterioration level. The product information preparation system therefore allows the person who suggests the maintenance service to make the suggestion about maintenance or update only focusing on the target product that highly needs to be subjected to maintenance or update.

The differentiation with the deterioration level may involve: differentiating the target product in a plurality of deterioration levels; differentiating the target product only between presence and absence of deterioration; and differentiating the target product between presence and absence of deterioration and further differentiating a target product in the plurality of deterioration levels.

According to an eighth aspect of the present invention, in the product information preparation system according to any of the first to seventh aspects, the recognition unit recognizes the image of the target product in the image data with differentiating a deterioration type. The preparation unit prepares the product information on the target product classified according to the deterioration type.

The product information preparation system recognizes the target product with differentiating the target product by the deterioration type, and prepares the product information on the target product classified according to the deterioration type. The product information preparation system therefore allows the person who suggests the maintenance service to make the appropriate suggestion about maintenance or update.

According to a ninth aspect of the present invention, in the product information preparation system according to any of the first to eighth aspects, the product information is updated and prepared at predetermined timing.

Since the product information is appropriately updated, the person who suggests the maintenance service makes, for example, the appropriate suggestion about maintenance, based on a change of the product information.

### <Advantageous Effects of the Invention>

The product information preparation system according to the first aspect of the present invention enables, for example, suggestion to perform maintenance of a product not previously subscribing to, for example, a maintenance service, that is, an unregistered product, using product information containing information on a position where the target product is installed, the product information being prepared based on image data without a necessity of field investigation by humans. The use of the product information preparation system therefore enables enticement of potential customers for the maintenance service. In addition, the product information preparation system allows a user of the product to receive the suggestion about maintenance without previous subscription to, for example, the maintenance service. The product information preparation system therefore readily keeps the used target product in an appropriate state and provides the user of the product with high convenience.

The product information preparation system according to the second aspect of the present invention enables preparation of product information based on, for example, an image of a landscape captured from above, such as an aerial photographic image or a satellite image, and an image of a landscape captured sidewise, such as a ground photographic image or a street view-type photographic image.

The product information preparation system according to the third aspect of the present invention enables to accurately find the image of the target product in the image data.

The product information preparation system according to the fourth aspect of the present invention can acquire product information that is readily utilized for sales activities.

The product information preparation system according to each of the fifth to ninth aspects of the present invention allows a person who suggests a maintenance service to readily make an appropriate suggestion about maintenance or update.

### BRIEF DESCRIPTION OF THE DRAWINGS

FIG. 1 is a schematic configuration diagram of an information preparation system according an embodiment of the present invention.
FIG. 2(a) is a schematic perspective view of an outdoor unit of a refrigeration apparatus as an example of a product to be recognized by the information preparation system illustrated in FIG. 1, and FIG. 2(b) is a schematic plan view of the outdoor unit of the refrigeration apparatus.
FIG. 3 is a schematic perspective view of an outdoor unit of another refrigeration apparatus as another example of a product to be recognized by the information preparation system illustrated in FIG. 1.
FIG. 4 illustrates an aerial photographic image of a landscape captured from above, as an example of a first image in which the information preparation system illustrated in FIG. 1 recognizes images of target products.
FIG. 5 illustrates an image of a landscape captured sidewise, as an example of a second image in which the information preparation system illustrated in FIG. 1 recognizes an image of a target product.
FIG. 6 illustrates an example of a product installation position distribution map prepared by a preparation unit of the information preparation system illustrated in FIG. 1.
FIG. 7 illustrates an example of a product information list prepared by the preparation unit of the information preparation system illustrated in FIG. 1.
FIG. 8 is an example of a flowchart of the product information preparing process to be executed by the information preparation system illustrated in FIG. 1.

### DESCRIPTION OF EMBODIMENTS

An information preparation system 100 according to an embodiment of the present invention will be described below with reference to the drawings.

### (1) General Configuration

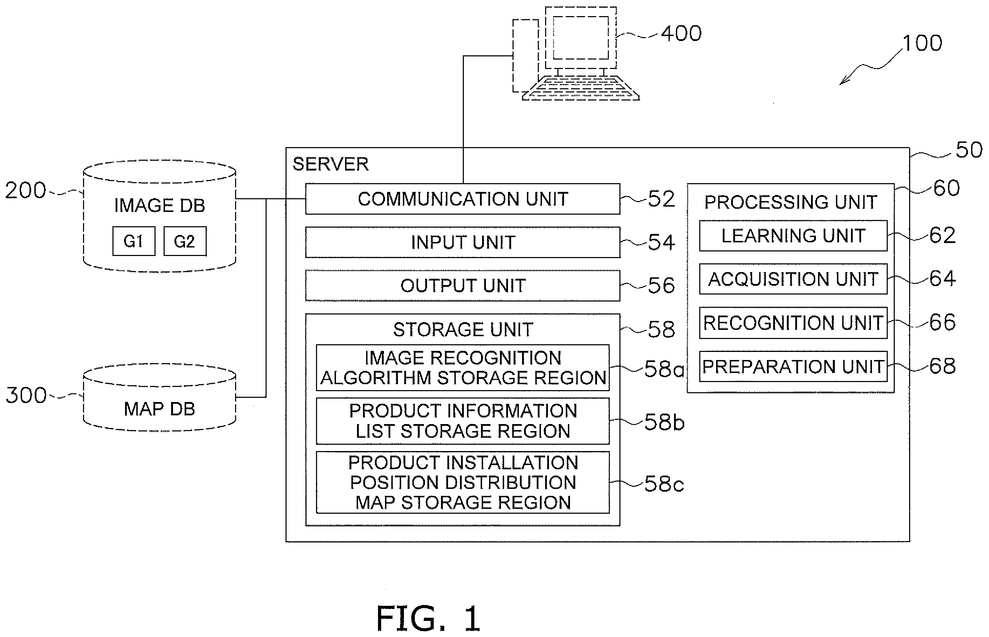

FIG. 1 is a schematic configuration diagram of the information preparation system 100 according an embodiment of the present invention.

The information preparation system 100 mainly includes a server 50.

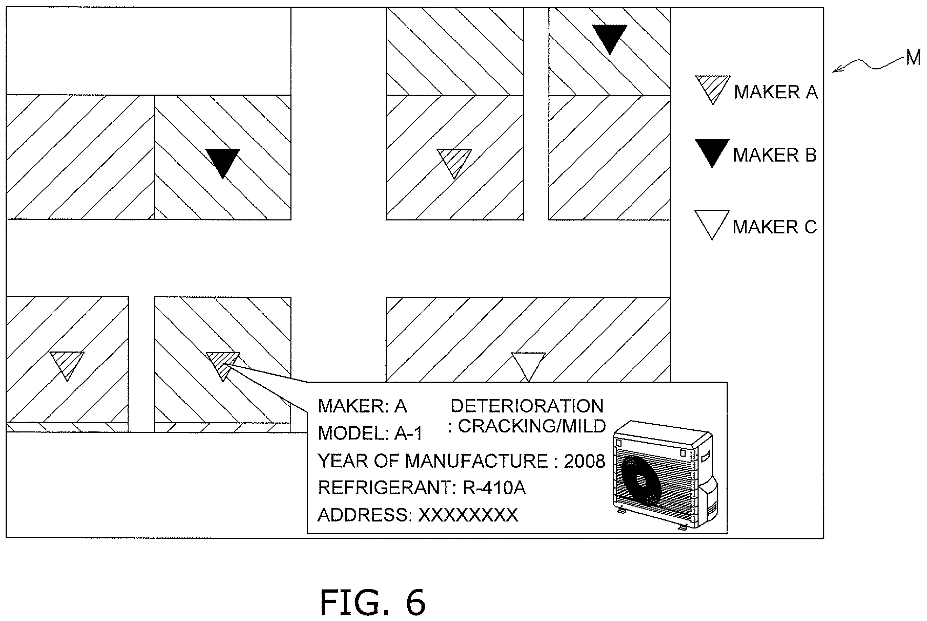

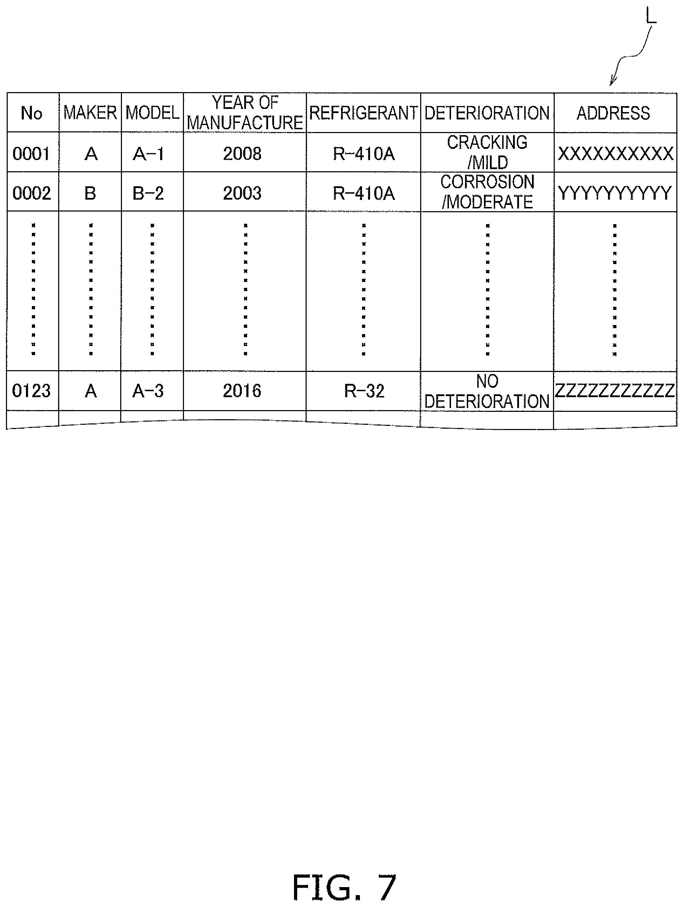

The server 50 is a computer that provides, as a cloud service, product information to a user of the information preparation system 100 (hereinafter, simply referred to as a user in some instances). The server 50 recognizes an image of a target product in image data on a landscape, the image data being correlated with position information. The server 50 then identifies a position where the target product thus recognized is installed, based on the position information correlated with the image data. The server 50 then prepares product information on the target product, the product information containing information on the position where the target product is installed. The server 50 thus provides the product information to the user. Examples of the product information, which is prepared by the server 50 and contains the information on the position where the target product is installed, may include a product installation position distribution map M illustrated in FIG. 6 and a product information list L illustrated in FIG. 7.

In this embodiment, a product whose product information is to be prepared, that is, a target product, is a device constituting a part of a refrigeration apparatus that causes a refrigerant to circulate in a refrigerant circuit. Examples of the refrigeration apparatus may include: an air conditioning apparatus such as an air conditioning apparatus for air cooling and air heating, an air conditioning apparatus for air cooling, or an air conditioning apparatus for air heating; a floor heating apparatus; a hot water supply apparatus; and a dehumidifying apparatus.

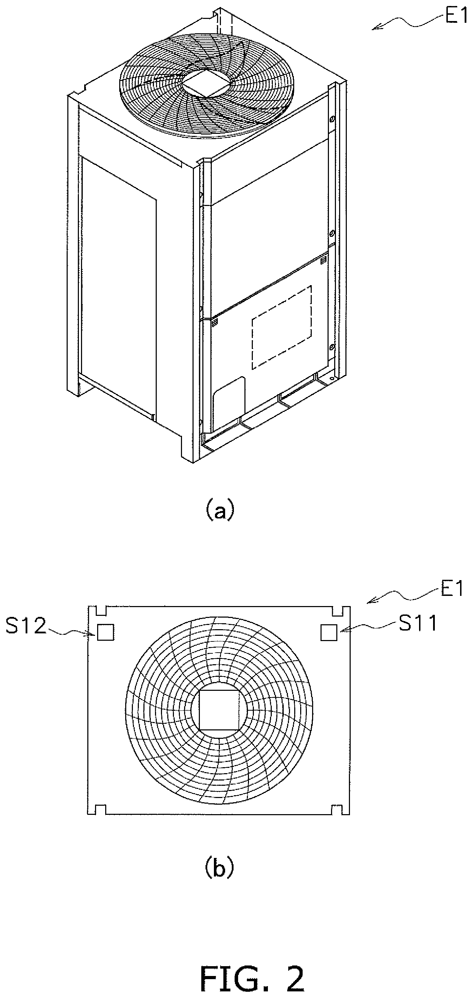

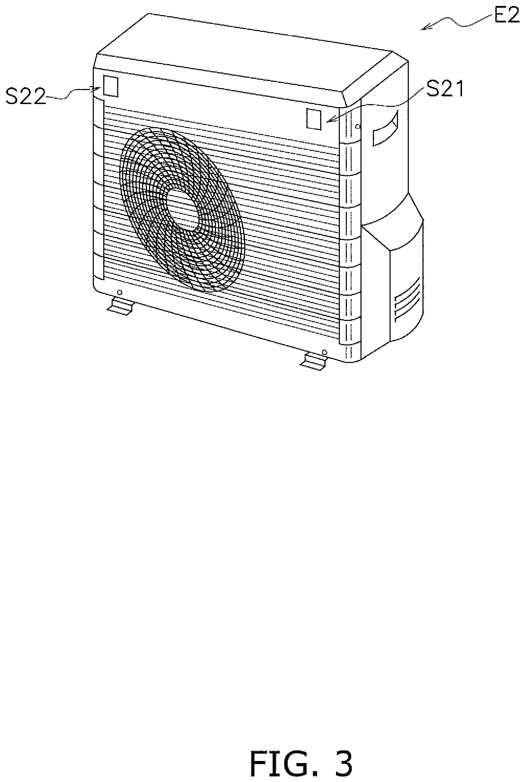

In this embodiment, the target product is particularly an outdoor unit (heat source unit) of an air conditioning apparatus, the outdoor unit being installed outdoors. Examples of the outdoor unit of the air conditioning apparatus as the target product may include a relatively large outdoor unit E1 having an air blow-out port in its top surface (see FIG. 2) and a relatively small outdoor unit E2 having an air blow-out port in its side surface (see FIG. 3). The outdoor unit E1 is installed on, for example, the rooftop of a building in relatively many instances; however, a place where the outdoor unit E1 is installed is not limited thereto. The outdoor unit E2 is installed along a wall of a house or is installed on a balcony of a house in relatively many instances; however, a place where the outdoor unit E2 is installed is not limited thereto. The two types of outdoor units E1 and E2 illustrated are merely examples of the outdoor unit of the air conditioning apparatus as the target product. Examples of the outdoor unit as the target product may include an outdoor unit that is different in shape and structure from the outdoor units E1 and E2, in place of or in addition to the outdoor units E1 and E2.

As illustrated in FIG. 2(b), the outdoor unit E1 is provided with, for example, a logo S11. As illustrated in FIG. 3, the outdoor unit E2 is provided with, for example, a logo S21. Each of the logos S11 and S21 is an example of a recognition indication. The logo S11 indicates the place of origin, such as a maker, of the outdoor unit E1. The logo S21 indicates the place of origin, such as a maker, of the outdoor unit E2. The logo S11 is provided on, for example, the top surface of the outdoor unit E1. The logo S21 is provided on, for example, the side surface of the outdoor unit E2.

As illustrated in FIG. 2(b), the outdoor unit E1 is also provided with, for example, a refrigerant type indication S12. As illustrated in FIG. 3, the outdoor unit E2 is also provided with, for example, a refrigerant type indication S22. The refrigerant type indication S12 indicates a type of refrigerant used in the outdoor unit E1. The refrigerant type indication S22 indicates a type of refrigerant used in the outdoor unit E2. Each of the refrigerant type indications S12 and S22 is, for example, a label on which a refrigerant type is printed, for example, in a form of a character set such as R410A, R407C, or R32. The refrigerant type indication S12 is provided on, for example, the top surface of the outdoor unit E1. The refrigerant type indication S22 is provided on, for example, the side surface of the outdoor unit E2.

In this embodiment, the outdoor unit of the air conditioning apparatus as the target product includes outdoor units of air conditioning apparatuses manufactured by different makers. In addition, the outdoor unit of each maker includes a plurality of outdoor units that are different in model and year of manufacture from one another. In this embodiment, for example, the outdoor unit as the target product includes several tens of types of outdoor units that are different from one another as to at least one of a maker, a model, and a year of manufacture.

The outdoor units, which are different in maker, model, or year of manufacture from one another, are different from one another as to an appearance, such as an overall design or a parts design, in many instances. The difference in design includes a difference in shape and a difference in color. The outdoor units, which are different in maker from one another, are different from one another as to, for example, a logo design and a logo position. When the outdoor units are different in model or year of manufacture from one another even if being manufactured by the same maker, the outdoor units are different from one another as to, for example, a logo design and a logo position in some instances. Although not illustrated in the drawings, in addition, the outdoor units, which are different in, for example, maker, model, or year of manufacture from one another, are different from one another as to, for example, details of specifications inscribed on a plate or label and a position of the plate or label in some instances.

The server 50 is connected via a network to an external image database system (image DB) 200 outside of the information preparation system 100. The server 50 is also connected via the network to an external map information database system (map DB) 300 outside of the information preparation system 100. The server 50 is also connected via the network to an external user terminal 400 outside of the information preparation system 100. The user terminal 400 is a terminal used by the user of the information preparation system 100. The network connecting the server 50 to the image DB 200, the map DB 300, and the user terminal 400 is the Internet. The network may alternatively be a wide area network (WAN).

The image DB 200 stores therein image data correlated with position information. The image data is, for example, image data on a landscape such as a residential area, a commercial area, or an industrial area, the image data being correlated with position information. The image DB 200 sends image data to the server 50 in accordance with a request from the server 50.

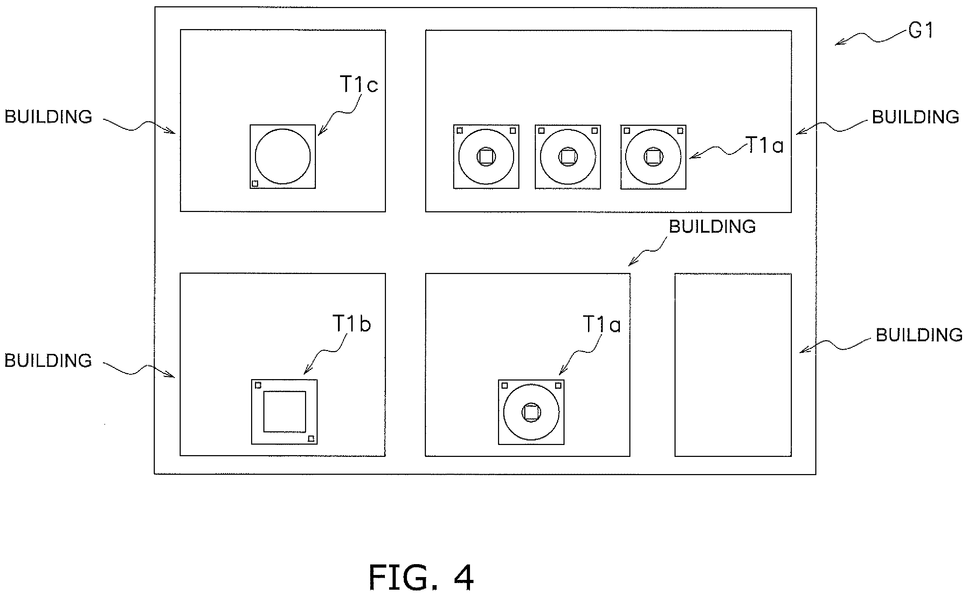

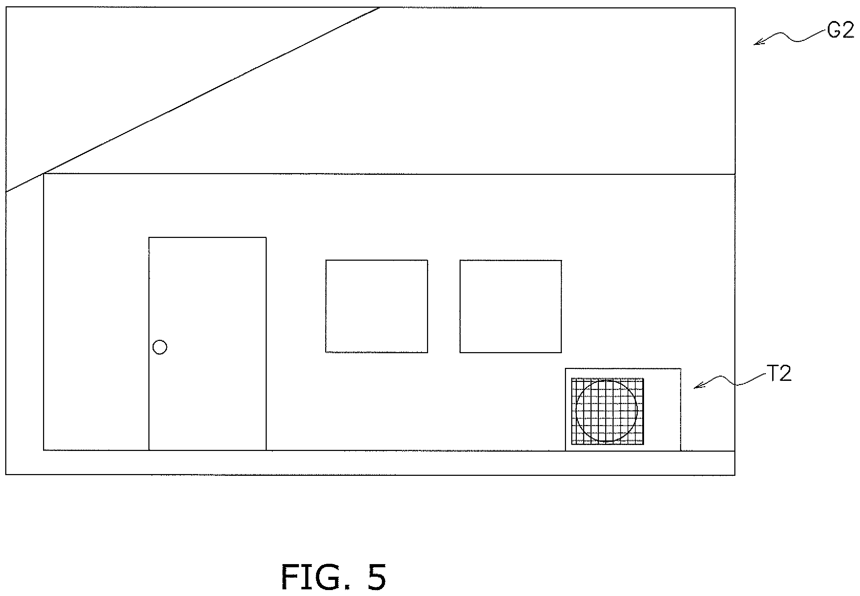

The image data stored in the image DB 200 and sent from the image DB 200 to the server 50 includes a first image G1 of a landscape illustrated in FIG. 4 and a second image G2 of a landscape illustrated in FIG. 5.

The first image G1 is an image of a landscape captured from above. The first image G1 is an aerial photographic image of a landscape captured by, for example, an aircraft. Here, the aircraft may include a drone. For example, the first image G1 is an aerial photographic image of a landscape captured directly below from above. Alternatively, the first image G1 may be an image of a landscape captured from obliquely above from a high place such as an aircraft. The first image G1 may be a satellite image. It should be noted that the first image G1 is an image in which a geographical position corresponding to each point in the image is known. The geographical position is, for example, geographical coordinates of or address information on a place indicated by a certain point in the image. In other words, the first image G1 is an example of image data correlated with position information.

The second image G2 is an image of a landscape captured sidewise. The term "sidewise" used in this embodiment is not limited to a horizontal direction. The image of the landscape captured sidewise includes an image of a landscape captured from an angle oriented obliquely upward. In addition, the image of the landscape captured sidewise includes an image of a landscape captured from an angle oriented obliquely downward but substantially sidewise. It should be noted that such an image is not an image of the roof or rooftop of a building being captured so as to look down the building from a high place. The second image G2 is an image of a landscape captured sidewise like, for example, a Google Street View. It should be noted that the second image G2 is an image in which a geographical position corresponding to each point in the image is known. The geographical position is, for example, geographical coordinates of or address information on a place indicated by a certain point in the image. In other words, the second image G2 is an example of image data correlated with position information.

In this embodiment, the server 50 receives image data from the external image DB 200 outside of the information preparation system 100; however, a method of acquiring image data is not limited thereto. Instead of acquiring image data from the image DB 200, for example, an acquisition unit 64 (to be described later) of the server 50 may acquire image data on images which are captured and then processed to add position information by, for example, an administrator of the information preparation system 100, via a communication unit 52 (to be described later) of the server 50 or from a storage medium such as a digital versatile disc-read only memory.

The map DB 300 stores therein map data. The map DB 300 sends map data to the server 50 in accordance with a request from the server 50.

The map data stored in the map DB 300 is map data on a geographical position corresponding to each point in a map is known. The geographical position is, for example, geographical coordinates of or address information on a place indicated by a certain point in an image. In other words, the map data is map data correlated with position information.

The user terminal 400 is a computer that allows the user to utilize product information containing information on a position where a target product is installed, the product information being prepared by the information preparation system 100. The product information is, for example, the product installation position distribution map M or the product information list L. Using the user terminal 400, the user accesses the server 50 to peruse, for example, the product installation position distribution map M and the product information list L.

It is assumed herein that the user terminal 400 is a stationary desktop computer; however, the user terminal 400 is not limited thereto. The user terminal 400 may be a notebook computer or a portable information terminal such as a tablet terminal or a smartphone.

The product installation position distribution map M is a map indicating a position where the outdoor unit of the air conditioning apparatus as the target product is installed. Specifically, the product installation position distribution map M indicates a position where the target product recognized in image data by the server 50 is installed. In other words, the product installation position distribution map M indicates a position where a target product, whose image is found in image data by a recognition unit 66 (to be described later) of the server 50, using an image recognition algorithm, is installed. In the following, the target product recognized in image data by the server 50 is referred to as the detected product in some instances for simplification of the description. As illustrated in FIG. 6, the product installation position distribution map M displays thereon a position where a detected product is installed, in the form of, for example, a predetermined graphics. On the product installation position distribution map M, for example, the predetermined graphics representing the detected product is displayed on a graphics representing a building. In a case where a plurality of target products are recognized in a single building, a plurality of predetermined graphics respectively representing the detected products may be displayed on a graphics representing the single building.

The product installation position distribution map M displays thereon positions where the detected products are installed, using colors different by maker. In other words, the product installation position distribution map M is an example of product information on the target product classified according to a maker. Although not illustrated in FIGS, the product installation position distribution map M may display thereon positions where the detected products are installed, using graphics different in shape from one another by maker.

Alternatively, the product installation position distribution map M may display thereon positions where the detected products are installed, using graphics different in shape and color from one another by model, year of manufacture, and/or refrigerant type, in place of or in addition to by maker. In other words, on the product installation position distribution map M as the product information, the target product may be classified according to at least one of items including a maker, a model, a year of manufacture, and used refrigerant. Preferably, the user is able to freely choose any of the maker, the model, the year of manufacture, and the used refrigerant for classifying the target products to be displayed on the product installation position distribution map M using the user terminal 400.

In place of or in addition to the configuration described above, the product installation position distribution map M may display thereon positions where the detected products are installed, using graphics different by deterioration state. The deterioration state is, for example, a deterioration type or a deterioration level. In other words, on the product installation position distribution map M as the product information, the target product may be classified according to at least one of items including a deterioration level and a deterioration type. Preferably, the user is able to freely choose whether the deterioration state, that is, the deterioration type or the deterioration level, is displayed on the product installation position distribution map M for classifying target products using the user terminal 400. A description on the deterioration states will be given later.

Preferably, when the user designates a graphics representing a position where a detected product is installed, using an input device such as a mouse, the product installation position distribution map M pop-up displays thereon various kinds of known information regarding the detected product represented by the graphics. Various kinds of known information is information turned out from image data. The pop-up display is an example of a display form, and similar information may be displayed in another display form. As illustrated in FIG. 6, preferably, examples of the information to be pop-up displayed may include: a maker, a model, and a year of manufacture of the detected product; a type of refrigerant used in the detected product; an address of a place where the detected product is installed; and a deterioration state of the detected product. As illustrated in FIG. 6, preferably, the information to be pop-up displayed contains an image of the detected product, that is, an image of the target product recognized by the server 50 in image data.

The product information list L is a list of positions where the detected products are installed. Preferably, the product information list L contains, with regard to the respective detected products, various kinds of known information regarding the detected products, that is, various kinds of information turned out from image data, in addition to information on the positions where the detected products are installed. Preferably, the product information list L contains, for example, with regard to the respective detected products, information on a maker, a model, and a year of manufacture of each detected product, information on a type of refrigerant used in each detected product, information on a deterioration state of each detected product, and information on an address of the position where each detected product is installed.

### (2) Specific Configuration

The server 50 receives the image data, such as the first image G1 and the second image G2, from the image DB 200, and recognizes (detects) an image of the target product in the image data. For example, the server 50 recognizes images T1a, T1b, and T1c of the target products in the first image G1. For example, the server 50 recognizes an image T2 of the target product in the second image G2. The server 50 then identifies a position where each recognized target product (detected product) is installed, that is, a geographical position where each target product is installed, based on the position information correlated with the image data. The server 50 prepares product information on detected products, the product information containing information on the position where the detected products are installed.

The server 50 is described in more detail.

The server 50 mainly includes a communication unit 52, an input unit 54, an output unit 56, a storage unit 58, and a processing unit 60.

### (2-1) Communication Unit

The communication unit 52 is a network interface capable of connecting the server 50 to the network such as a WAN or the Internet. The communication unit 52 is capable of exchanging information with the image DB 200, map DB 300, and user terminal 400 outside of the information preparation system 100 through the network. The server 50 establishes communications with these devices, based on protocols.

### (2-2) Input Unit

The input unit 54 is an input interface through which the administrator of the information preparation system 100 inputs instructions and various kinds of information. The input unit 54 includes, for example, a keyboard and a mouse.

### (2-3) Output Unit

The output unit 56 is an output interface that displays thereon various kinds of information for the administrator of the information preparation system 100. The output unit 56 includes, for example, a liquid crystal display.

### (2-4) Storage Unit

The storage unit 58 includes primary storage devices such as a random access memory and a read only memory. The storage unit 58 also includes secondary storage devices such as a hard disk drive. The storage unit 58 stores therein various programs to be executed by the processing unit 60 described later, and various kinds of information.

The storage unit 58 includes, as information storage regions, an image recognition algorithm storage region 58a, a product information list storage region 58b, and a product installation position distribution map storage region 58c. Information stored in the image recognition algorithm storage region 58a, information stored in the product information list storage region 58b, and information stored in the product installation position distribution map storage region 58c will be described later in conjunction with processes to be executed by the processing unit 60.

### (2-5) Processing Unit

The processing unit 60 mainly includes a central processing unit. The processing unit 60 executes the various processes by reading and executing the programs stored in the storage unit 58. The processing unit 60 executes the programs stored in the storage unit 58, thereby functioning as a learning unit 62, an acquisition unit 64, a recognition unit 66, and a preparation unit 68.

### (2-5-1) Learning Unit

The learning unit 62 is a functional unit configured to construct an image recognition algorithm to be used when the recognition unit 66 (to be described later) recognizes the images of the target products (e.g., the images T1a, T1b, T1c, and T2 illustrated in FIGS. 4 and 5) in image data including the first image G1 and the second image G2.

When the administrator (operator) of the information preparation system 100 receives from the user an order for providing product information, the administrator causes the learning unit 62 to construct the image recognition algorithm. The administrator of the information preparation system 100 causes the learning unit 62 to construct the image recognition algorithm as follows, for example.

First, the administrator of the information preparation system 100 receives from the image DB 200 a predetermined amount of image data, that is, sample image data. The predetermined amount of sample image data is sufficient for the learning unit 62 to construct an appropriate image recognition algorithm by machine learning. The administrator then manually collects, from the sample image data, a predetermined number of learning images with the target product in them as to various types of target products. Specifically, the administrator visually checks the sample image data to pick up, for example, several hundreds of learning images with target products in them.

In this embodiment, the recognition unit 66 recognizes the images of target products in the image data, with differentiating a maker, a model, a year of manufacture, and used refrigerant. In collecting the learning images, therefore, products that are different from one another as to one of the maker, the model, the year of manufacture, and the refrigerant type, are regarded as products that are different in type from one another. In a case where the recognition unit 66 is not configured to recognize the images of target products in the image data with differentiating any of the items described above, products that are different in non-differentiated items from one another, may be regarded as products that are equal in type to one another.

Also in this embodiment, the recognition unit 66 recognizes the images of target products in the image data with differentiating a deterioration state (a deterioration type and a deterioration level). In collecting the learning images, therefore, products that are different from one another as to the deterioration state, that is, at least one of the deterioration type and the deterioration level, is regarded as products that are different in type from one another. In a case where the recognition unit 66 is not configured to recognize the images of target products in the image data with differentiating the deterioration state, products that are different in deterioration state from one another, may be regarded as products that are equal in type to one another.

The deterioration type includes at least one of wear, cracking, fracture, disconnection, looseness of, for example, a screw, removal of, for example, a screw, deformation, scratching, contact failure, omission of a component, rust, corrosion, and contamination. In collecting the learning images, a combination of two or more deterioration types (e.g., rust and corrosion) may be regard as one deterioration type.

The deterioration is not limited to gentle deterioration such as aged deterioration. The deterioration may include deterioration that may occur in a short period, that is, rapid deterioration of a product due to, for example, an abnormal event such as ignition or overheating, and a physical impact such as an accident.

In this embodiment, the deterioration level is divided into four levels of a severe deterioration level that requires immediate measures, a moderate deterioration level that requires relatively early measures, a mild deterioration level that does not require early measures, and a no-deterioration level. However, the deterioration level is not necessarily divided into four levels. For example, the deterioration level may be divided into two levels or three levels. Alternatively, the deterioration level may be divided into five or more levels.

The administrator picks up the learning images from the sample image data, and then gives, as teaching labels, information on the target product in the learning images, such as a maker, a model, a year of manufacture, a refrigerant type used, and a deterioration state (e.g., a deterioration type and a deterioration level). The administrator manually determines the information from the images. The administrator stores the learning images with the teaching labels as teaching data in the storage unit 58.

Next, the administrator causes the learning unit 62 to execute machine learning using the teaching data, that is, supervised learning. The learning unit 62 performs the machine learning, using methods of, for example, neural network or deep learning. The learning unit 62 may also perform the machine learning, using methods of, for example, support vector machine or boosting. The learning unit 62 extracts features from the images of the respective target products, that is, images of the various types of targets products classified by maker, model, year of manufacture, refrigerant type, and deterioration state. The features thus extracted concern, for example, appearances of the target products. Examples of features to be extracted may include, in place of or in addition to the features concerning the appearances of the target products, features concerning the logos S11 and S21 on the target products, features concerning the refrigerant type indications S12 and S22 on the target products, and features concerning the plates (not illustrated) on the target products, the plates having the information on, for example, the product specifications inscribed thereon. The features may also include a feature on image brightness. The features may also be, for example, SIFT features. Next, the learning unit 62 extracts rules for determining the respective target products, using the features thus extracted, and constructs image recognition algorithms for extracting images of the respective target products from the image data. The methods of neural network, deep learning, support vector machine, and boosting are merely examples of a method of machine learning. The method of machine learning is not limited thereto. Using an appropriate one of the methods, the learning unit 62 constructs the image recognition algorithm for recognizing the images of the target products from the image data. The learning unit 62 stores the image recognition algorithm thus constructed in the image recognition algorithm storage region 58a of the storage unit 58.

The learning unit 62 constructs two image recognition algorithms, that is, an image recognition algorithm for the first image G1 of the landscape captured from above and an image recognition algorithm for the second image G2 of the landscape captured sidewise. In order to construct the image recognition algorithm for the first image G1, the learning unit 62 uses the learning images collected (picked up) from the sample image data on images of the landscape captured from above. In order to construct the image recognition algorithm for the second image G2, the learning unit 62 uses the learning images collected (picked up) from the sample image data on images of the landscape captured sidewise.

As described above, since the outdoor unit E1 is installed on, for example, the rooftop of a building in relatively many instances, the outdoor unit E1 is not in the second image G2 in many instances. On the other hand, since the outdoor unit E2 is installed along a wall of a house or is installed on a balcony of a house in relatively many instances, the outdoor unit E2, which hides behind the building, is not in the first image G1 in many instances. In constructing the image recognition algorithm for the second image G2, hence, it may not be necessary to collect the images of the outdoor unit E1 from the sample image data on the images of the landscape captured sidewise. In other words, the image recognition algorithm for the second image G2 does not necessarily have a function of recognizing the outdoor unit E1. In constructing the image recognition algorithm for the first image G1, it may not be necessary to collect the images of the outdoor unit E2 from the sample image data on the images of the landscape captured from above. In other words, the image recognition algorithm for the first image G1 does not necessarily have a function of recognizing the outdoor unit E2.

In this embodiment, the learning unit 62 of the server 50 performs the machine learning to construct the image recognition algorithms; however, the method of constructing the image recognition algorithms is not limited thereto. Image recognition algorithms may be constructed in another computer and the server 50 may store in the image recognition algorithm storage region 58a the image recognition algorithms constructed and provided by the computer.

### (2-5-2) Acquisition Unit

The acquisition unit 64 acquires one or more image data items, specifically, one or more first images G1 and one or more second images G2 each correlated with position information, stored in the image DB 200, at the time when the recognition unit 66 recognizes the images of target products in the image data.

For example, when the administrator of the information preparation system 100 gives through the input unit 54 an instruction to prepare product information on a certain target geographical domain such as a certain city, the product information containing information on the position where the target product is installed, the acquisition unit 64 requests to transmit image data on the target geographical domain to the image DB 200 via the communication unit 52. The acquisition unit 64 stores the image data acquired from the image DB 200 in the storage unit 58. Preferably, the acquisition unit 64 acquires both of the first image G1 and the second image G2 at a single point, that is, on single geographical coordinates or a single address.

The information preparation system 100 updates product information each time a predetermined period of time, such as one year, elapses from preparation of the product information. Therefore, the acquisition unit 64 requests to transmit image data on the target geographical domain to a computer that manages the image DB 200, via the communication unit 52 when the predetermined period of time elapses from the preparation of the product information. Also in this case, the acquisition unit 64 stores in the storage unit 58 the image data on the target geographical domain acquired from the image DB 200.

The information preparation system 100 may update and prepare the product information at timing when the image data in the image DB 200 is updated, in place of updating and preparing the product information every predetermined period of time. For example, when the communication unit 52 receives a notification from the image DB 200 that the image data is updated, the acquisition unit 64 may request to transmit image data on the target geographical domain to the image DB 200 to acquire the image data from the image DB 200.

### (2-5-3) Recognition Unit

When the acquisition unit 64 acquires image data, the recognition unit 66 recognizes the images T1a, T1b, T1c, and T2 of target products in the image data (the first image G1 and the second image G2) acquired by the acquisition unit 64 from the image DB 200, using image recognition algorithms stored in the image recognition algorithm storage region 58a.

For example, the recognition unit 66 recognizes the images T1a, T1b, and T1c of the target products in the first image G1 as follows.

First, the recognition unit 66 defines a range of an appropriate size for a recognizing process in the first image G1 as a recognition target image. If a geographical domain included in the first image G1 has a relatively small area, the recognition unit 66 may define the entire first image G1 as the recognition target image. Using the image recognition algorithm for the first image G1 in the image recognition algorithm storage region 58a, the recognition unit 66 recognizes the images T1a, T1b, and T1c of the target products in the recognition target image. In other words, the recognition unit 66 recognizes whether images of the target products are in the recognition target image.

The recognition unit 66 recognizes the image T2 of the target product in the second image G2 as follows.

First, the recognition unit 66 defines a range of an appropriate size for a recognizing process in the second image G2 as a recognition target image. If a geographical domain included in the second image G2 has a relatively small area, the recognition unit 66 may define the entire second image G2 as the recognition target image. Using the image recognition algorithm for the second image G2 in the image recognition algorithm storage region 58a, the recognition unit 66 recognizes the image T2 of the target product in the recognition target image. In other words, the recognition unit 66 recognizes whether an image of the target product is in the recognition target image.

The recognition unit 66 repeatedly performs the process described above so as to recognize images of target products in the entire geographical domain (target geographical domain) instructed as to preparation of product information. In other words, the recognition unit 66 repeatedly performs the process described above so as to recognize images of target products in the first and second images G1 and G2 that cover the entire target geographical domain.

The image recognition algorithm is used for recognizing images of target products in image data, based on, for example, appearances of the target products and recognition indications on the target products. For example, the recognition unit 66 recognizes images of target products in the image data, based on at least one of appearances of the target products and recognition indications, such as the logos S11 and S21, on the target products. Alternatively, the recognition unit 66 may recognize images of target products in image data, based on another recognition indications provided on the target products, such as the refrigerant type indications S12 and S22 or the plates on which the information on, for example, the product specifications is inscribed.

The image recognition algorithm is designed such that the recognition unit 66 recognizes that products are different in type from one another when the products are different from one another as to at least one of a maker, a model, a year of manufacture, used refrigerant, and a deterioration state. Therefore, the recognition unit 66 recognizes images of target products in image data with differentiating the maker, the model, and the year of manufacture. In this embodiment, the recognition unit 66 also recognizes the images of the target products in the image data with differentiating the refrigerant used in each target product. The recognition unit 66 also recognizes the images of the target products in the image data with differentiating the deterioration level. The recognition unit 66 also recognizes the images of the target products in the image data with differentiating the deterioration type.

In a case where the target product has at least two types of deterioration, the recognition unit 66 may recognize plural times an image of this target product in image data since the deterioration type is different. Therefore, if the recognition unit 66 already recognizes the image of the target product at a certain pixel of the recognition target image, the recognition unit 66 may ignore the image of the target product even when recognizing the image again. Alternatively, if the recognition unit 66 has already recognized an image of a target product at a certain pixel of a recognition target image, the recognition unit 66 may provide a notification that this target product has already been recognized to the preparation unit 68 such that product information to be prepared does not contain multiple pieces of information on the same target product. Upon reception of this notification, the preparation unit 68 may reflect, on the product information, only additional information on the deterioration type.

### (2-5-4) Preparation Unit

When the recognition unit 66 recognizes (detects) images of target products in image data, that is, a recognition target image, the preparation unit 68 identifies positions where the target products, that is, detected products recognized by the recognition unit 66 are installed, based on position information correlated with the image data. Specifically, the preparation unit 68 identifies a position of a pixel recognized by the recognition unit 66 as an image of a target product in the recognition target image based on the first image G1, and identifies a geographical position corresponding to the pixel based on position information correlated with the first image G1. The preparation unit 68 also identifies a position of a pixel recognized by the recognition unit 66 as an image of a target product in the recognition target image based on the second image G2, and identifies a geographical position corresponding to the pixel based on position information correlated with the second image G2. The preparation unit 68 thus identifies a position where a target product recognized by the recognition unit 66 is installed, the target product being identified as to a maker, a model, a year of manufacture, a used refrigerant, and a deterioration state.

This information is stored in the product information list storage region 58b of the storage unit 58 in the form of, for example, the product information list L illustrated in FIG. 7. In other words, the preparation unit 68 prepares the product information list L of the target products, the product information list L containing the information on the positions where the target products are installed. In addition to the information on the positions where the detected products are installed, the product information list L contains information on the makers, models, years of manufacture, refrigerant types in use, and deterioration states of the respective products. The product information list L is an example of product information on a target product to be prepared by the preparation unit 68, the product information containing information on a position where the target product is installed.

When the recognition unit 66 completes the process of recognizing the images of the target products for the entire target geographical domain instructed as to preparation of the product information in the image data, that is, the first and second images G1 and G2, the preparation unit 68 requests to transmit map data on the target geographical domain to the map DB 300. In the map data, position information at each point on a map is known. The preparation unit 68 prepares the product installation position distribution map M by displaying graphics representing the target products on points respectively corresponding to the positions where the target products are installed on the map, based on the product information list L. The product installation position distribution map M thus prepared is stored in the product installation position distribution map storage region 58c.

The product information list L and the product installation position distribution map M, each of which is an example of product information to be prepared by the preparation unit 68, show the target products classified according to items of a maker, a model, and a year of manufacture. The product information list L and the product installation position distribution map M, each of which is an example of product information to be prepared by the preparation unit 68, also show the target products classified according to a refrigerant used in each target product. The product information list L and the product installation position distribution map M, each of which is an example of product information to be prepared by the preparation unit 68, also show the target products classified according to a deterioration level. The product information list L and the product installation position distribution map M, each of which is an example of product information to be prepared by the preparation unit 68, also show the target products classified according to a deterioration type.

When the acquisition unit 64 acquires image data and the recognition unit 66 performs the process of recognizing images of target products in this image data, after a lapse of a predetermined period of time from preparation of product information or at timing when the image data stored in the image DB 200 is updated, the preparation unit 68 newly prepares as product information the product information list L and the product installation position distribution map M in a manner similar to that described above. In other words, the product information is updated and prepared at predetermined timing.

Although not illustrated in the drawings, preferably, the preparation unit 68 prepares the product information list L and the product installation position distribution map M that allow the user to grasp a secular change in product information. For example, if an image of a target product which has not been found (recognized) is newly recognized, the product information list L and the product installation position distribution map M are preferably prepared so that the user can be easily aware of it, for example, by changing a display color. If an image of a target product has been recognized before at a position and, at the same potion, an image of a target product that is same with the previously recognized product in maker, model, year of manufacture and used refrigerant and that has changed from the previously recognized product in deterioration state is recognized, a product information list L and a product installation position distribution map M are preferably prepared so that the user can be easily aware of the change, for example, by changing a display color.

For example, the user of the information preparation system 100 may utilize the product information list L and the product installation position distribution map M as follows.

Heretofore, it has been difficult to make, for example, a suggestion about maintenance since there is a case that it is difficult to grasp a position where a product not previously subscribing to, for example, a maintenance service is installed. In contrast to this, the use of the product information list L and product installation position distribution map M prepared by the information preparation system 100 enables identification of a position where a product is used, without a necessity of, for example, field investigation by humans. The use of this information preparation system therefore enables enticement of potential customers for a maintenance service. In addition, it is possible for users of the product to receive the suggestion about maintenance without previous subscription to, for example, the maintenance service. This information preparation system therefore readily keeps the target product in use in an appropriate state and achieves high convenience. Particularly, in the product information list L and the product installation position distribution map M, products are differentiated with, for example, information on a maker, a model, a year of manufacture, a used refrigerant, and a deterioration state, in addition to a position where the product is installed. This configuration therefore facilitates suggestion about an appropriate maintenance service.

The product information list L and the product installation position distribution map M may also be utilized for not only suggestion about a maintenance service, but also, for example, suggestion to update a product. Further, the product information list L and the product installation position distribution map M provide, for example, information on a distribution of products by region, information on a distribution of competitor's products and one's own products, chronological information on products. The product information list L and the product installation position distribution map M can be therefore utilized for, for example, drafting a sales strategy.

The product information list L and the product installation position distribution map M include, for example, information on an aged deterioration state of a product, and are therefore applicable to improvement in product quality. For example, if it is possible to grasp an aged deterioration state of a product, such information can be used for, for example, development of a method of suppressing such deterioration. The information preparation system 100 readily collects the information although the number of collectable samples is limited if the information is manually collected.

In addition, the product information list L and the product installation position distribution map M are useful in grasping the location of recall products. At present, if location of the products are not grasped in advance, for example, if there is no customer information or the like, it is announced to the consumers of the products through a medium such as newspaper in expectation that the consumers themselves become aware of the recall. According to this method, however, there is a possibility that the consumers are not aware of this announcement or the consumers misunderstand a model and a year of manufacture as to their own products even when they become aware of this announcement. When the locations of products are grasped with the product information list L and the product installation position distribution map M, it is possible to reduce an omission of the grasping of the locations of the recall products.

### (3) Product Information Preparing Process by Server

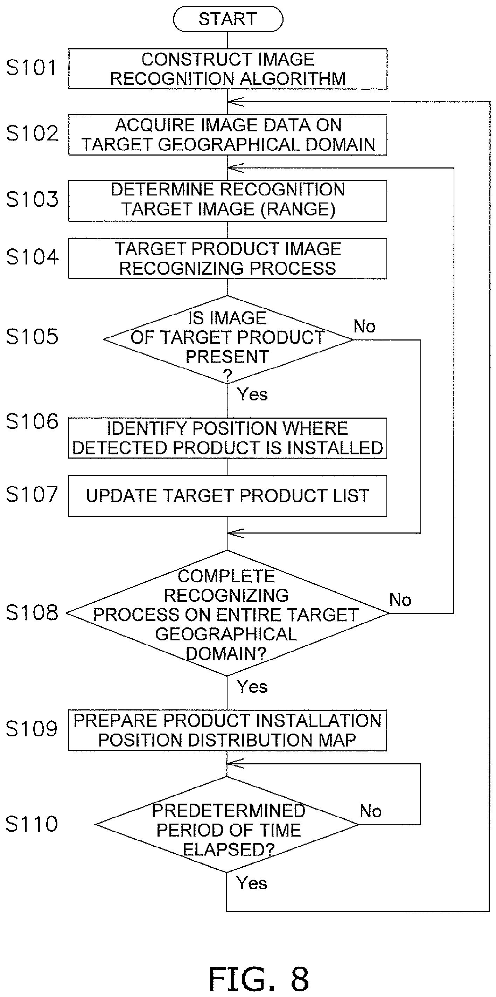

With reference to a flowchart of FIG. 8, next, a description will be given of an exemplary product information preparing process to be executed by the server 50.

Since the details of the process to be executed by each functional unit (the learning unit 62, the acquisition unit 64, the recognition unit 66 and the preparation unit 68) of the processing unit 60 in the server 50 have already been described, a flow of the processing is mainly described below.

First, when the administrator of the information preparation system 100 receives from the user an order to provide product information, the administrator causes the learning unit 62 to construct an image recognition algorithm. In step S101, the learning unit 62 stores the image recognition algorithm thus constructed, in the image recognition algorithm storage region 58a of the storage unit 58.

In step S102, next, when the administrator of the information preparation system 100 provides, through the input unit 54, an instruction to prepare product information on a target product, the product information containing information on a position where the target product is installed, with regard to a certain target geographical domain, based on the request from the user, the acquisition unit 64 acquires image data on the target geographical domain from the image DB 200.

In step S103, next, the recognition unit 66 defines a range of an appropriate size for a recognizing process as a recognition target image, with regard to the image data, more specifically in the first image G1 or the second image G2 included in the image data acquired by the acquisition unit 64.

In step S104, next, when the recognition target image defined in step S103 is based on the first image G1, the recognition unit 66 recognizes an image of the target product in the recognition target image, using an image recognition algorithm for the first image G1, the image recognition algorithm being stored in the image recognition algorithm storage region 58a. On the other hand, when the recognition target image defined in step S103 is based on the second image G2, the recognition unit 66 recognizes an image of the target product in the recognition target image, using an image recognition algorithm for the second image G2, the image recognition algorithm being stored in the image recognition algorithm storage region 58a.

In step S105, next, it is determined whether the image of the target product is recognized in the recognition target image, that is, whether the image of the target product is present in the recognition target image, in the processing of step S104. When the image of the target product is recognized, the processing proceeds to step S106. When the image of the target product is not recognized, the processing proceeds to step S108.

In step S106, the preparation unit 68 identifies the position where the target product (detected product) recognized in the recognition target image by the recognition unit 66 is installed, based on position information correlated with the image data.

In step S107, the preparation unit 68 stores, in the storage unit 58, a fact that the target product recognized by the recognition unit 66 in step S104 for a maker, a model, a year of manufacture, a refrigerant type, a deterioration level and a deterioration type is installed at the position identified in step S106. In step S107, specifically, the preparation unit 68 updates the product information list L stored in the product information list storage region 58b, by addition of the information acquired in step S104 and the information acquired in step S106. If the product information list L is not prepared yet, the preparation unit 68 newly prepares the product information list L.

In step S108, it is determined whether the recognition unit 66 has completed the target product image recognizing process as to the image data, including both of the first image G1 and the second image G2, on the entire target geographical domain. Specifically, it is determined whether the recognition target images are defined for the entire portions to be processed, with regard to each of the first image G1 and the second image G2 concerning the target geographical domain, and whether the recognition unit 66 executes the target product image recognizing process for all recognition target images. When the target product image recognizing process is not completed, the processing returns to step S103. When the target product image recognizing process is completed, the processing proceeds to step S109.

In step S109, next, the preparation unit 68 requests the map DB 300 to send map data on the target geographical domain. The preparation unit 68 prepares the product installation position distribution map M by displaying a graphics representing the target product on a point corresponding to the position where the target product is installed on the map data, based on the product information list L stored in the product information list storage region 58b. The product installation position distribution map M thus prepared is stored in the product installation position distribution map storage region 58c. The processing then proceeds to step S110.

In step S110, it is determined whether a predetermined period of time has elapsed from the preparation of the product installation position distribution map storage region 58c in step S109. When the predetermined period of time has elapsed, the processing returns to step S102. The series of processes for preparing product information is executed again.

### (4) Features

(4-1)
This embodiment provides the information preparation system 100 as a product information preparation system. The information preparation system 100 includes the acquisition unit 64, the recognition unit 66, and the preparation unit 68. The acquisition unit 64 acquires image data on a landscape. The image data is correlated with position information. The recognition unit 66 recognizes an image T1a, T1b, T1c, or T2 of the target product in the image data acquired by the acquisition unit 64. The preparation unit 68 identifies a position where the target product recognized by the recognition unit 66 is installed, based on the position information correlated with the image data and to prepare product information on the target product. The product information contains information on the position where the target product is installed.

With this configuration, it is possible to make a suggestion to perform maintenance of a product not previously subscribing to, for example, a maintenance service, that is, an unregistered product, using product information containing information on a position where the target product is installed, the product information being prepared based on image data without a necessity of field investigation by humans. The use of the information preparation system 100 therefore enables enticement of potential customers for a maintenance service. In addition, the information preparation system 100 allows a user of the product to receive the suggestion about maintenance without previous subscription to, for example, the maintenance service. The information preparation system 100 therefore readily keeps the used target product in an appropriate state and provides the user of the product with high convenience.

(4-2)
In the information preparation system 100 according to this embodiment, the image data contains the first image G1 of a landscape captured from above and the second image G2 of a landscape captured sidewise.

Since the image data particularly contains the images that are different in image capturing angle from each other, the information preparation system 100 finds a product that cannot be recognized or is less likely to be recognized from one of the images, from the other image, and reduces a possibility of omission of an investigation for locating a product.

(4-3)
In the information preparation system 100 according to this embodiment, the recognition unit 66 recognizes the image of the target product in the image data, based on at least one of an appearance of the target product and a recognition indication provided on the target product.

The recognition indication on the target product is, for example, the logo S11 provided on the outdoor unit E1 and the logo S21 provided on the outdoor unit E2.

It is possible to accurately find the image of the target product in the image data because the image of the target product in the image data is recognized, based on the appearance of the target product or the recognition indication on the target product.

(4-4)
In the information preparation system 100 according to this embodiment, the preparation unit 68 prepares the product installation position distribution map M as the product information containing the information on the position where the target product is installed.

In this embodiment, the system prepares the product installation position distribution map M, that is, a map indicating the position where the target product is installed. The use of the product installation position distribution map M allows a user to visually and readily grasp the position where the target product is installed. Therefore, a sales representative of a maintenance service provider can readily utilize the product installation position distribution map M for his/her sale activities.

(4-5)
In the information preparation system 100 according to this embodiment, the recognition unit 66 recognizes the image of the target product in the image data with differentiating a maker, a model, and a year of manufacture. The preparation unit 68 prepares the product information on the target product classified according to these items.

The information preparation system 100 does not simply recognize the presence of the target product, but recognize the target product with differentiating the target product by at least one of the items including the maker, the model and the year of manufacture, and prepares the product information on the target product classified according to at least one of the items. The information preparation system 100 therefore allows a person who suggests a maintenance service to readily make an appropriate suggestion about maintenance or update.

(4-6)
In the information preparation system 100 according to this embodiment, the target product is a device constituting at least a part of a refrigeration apparatus that causes a refrigerant to circulate through a refrigerant circuit. The target product is particularly an outdoor unit of the air conditioning apparatus. The recognition unit 66 recognizes the image of the target product in the image data with differentiating the refrigerant used in the target product. The preparation unit 68 prepares the product information on the target product classified according to the refrigerant.

The information preparation system 100 does not simply recognize the presence of the device constituting the refrigeration apparatus, as the target product, but recognize the constitution device with differentiating the device by the used refrigerant and prepares the product information on the target product classified according to the refrigerant. The information preparation system 100 therefore allows a person who suggests a maintenance service to readily make an appropriate suggestion about maintenance or update.

(4-7)
In the information preparation system 100 according to this embodiment, the recognition unit 66 recognizes the image of the target product in the image data with differentiating a deterioration level. The preparation unit 68 prepares the product information on the target product classified according to the deterioration level.

The information preparation system 100 does not simply recognize the presence of the target product, but recognize the target product with differentiating the target product by the deterioration level and prepares the product information on the target product classified according to the deterioration level. The information preparation system 100 therefore allows a person who suggests a maintenance service to make a suggestion about maintenance or update only focusing on a target product that highly needs to be subjected to maintenance or update.

(4-8)
In the information preparation system 100 according to this embodiment, the recognition unit 66 recognizes the image of the target product in the image data with differentiating a deterioration type. The preparation unit 68 prepares the product information on the target product classified according to the deterioration type.

The information preparation system 100 recognizes the target product with differentiating the target product by the deterioration type, and prepares the product information on the target product classified according to the deterioration type. The information preparation system 100 therefore allows a person who suggests a maintenance service to make an appropriate suggestion about maintenance or update.

(4-9)
In the information preparation system 100 according to this embodiment, the product information is updated and prepared at predetermined timing.

Since the product information is appropriately updated, a person who suggests a maintenance service makes, for example, an appropriate suggestion about maintenance, based on a change of the product information.

### (5) Modifications

Next, a description will be given of modifications of the foregoing embodiment. It should be noted that some of or all of the configurations in the respective modifications may be combined with some of or all of the configurations in the other modifications insofar as there are no consistencies.

### (5-1) Modification A

According to the foregoing embodiment, the server 50 is a computer configured to provide a cloud service. The user of the information preparation system 100 utilizes, through the user terminal 400, product information prepared by the server 50, that is, product information prepared by the administrator of the information preparation system 100. For example, the information preparation system may include, in place of the server 50, a computer having functions similar to those of the server 50 to be operated by the user. The user may directly operate the computer to utilize the product information.

### (5-2) Modification B

According to the foregoing embodiment, the target product is an outdoor unit of a refrigeration apparatus, more specifically an outdoor unit of an air conditioning apparatus. However, the target product is not limited to an outdoor unit of a refrigeration apparatus. Examples of the target product may include an apparatus, such as a vending machine on a road, and a satellite antenna on the rooftop or balcony of a building.

### (5-3) Modification C

According to the foregoing embodiment, the recognition unit 66 recognizes an image of a target product in image data with differentiating by three items including a maker, a model, and a year of manufacture. The recognition unit 66 may recognize the image of the target product in image data without differentiating the image with at least any of the items including the maker, the model, and the year of manufacture. For example, the recognition unit may simply recognize an image of a target product in image data, as an outdoor unit of an air conditioning apparatus, irrespective of any of a maker, a model, and a year of manufacture.

From the viewpoint of making a suggestion about an appropriate maintenance service, preferably, the recognition unit recognizes an image of a target product in image data with differentiating by at least a maker. More preferably, the recognition unit recognizes an image of a target product in image data with differentiating by a maker and with a model or a year of manufacture. Still more preferably, the recognition unit recognizes an image of a target product in image data with differentiating by a maker, with a model, and with a year of manufacture.

### (5-4) Modification D

As described in the foregoing embodiment, preferably, the recognition unit 66 recognizes an image of a target product in image data with differentiating by a refrigerant used in the target product. For example, the recognition unit may recognize an image of a target product in image data without differentiating the image with a refrigerant.

### (5-5) Modification E

As described in the foregoing embodiment, preferably, the recognition unit 66 recognizes an image of a target product in image data with differentiating by a deterioration state (by deterioration type and by deterioration level). Alternatively, the recognition unit may recognize an image of a target product in image data with differentiating by one of a deterioration type and a deterioration level. Still alternatively, the recognition unit may recognize an image of a target product in image data without differentiating the image by a deterioration state.

### (5-6) Modification F

According to the foregoing embodiment, the recognition unit 66 recognizes an image of a target product in image data, using two images, that is, a first image G1 of a landscape captured from above and a second image G2 of a landscape captured sidewise with regard to a single point. The recognition unit may recognize an image of a target product in image data, using one of the images which are different in viewpoint. Specifically, if the recognition unit is capable of recognizing a target product with almost no omission, using one of the images which are different in viewpoint, the recognition unit may recognize an image of the target product in image data, using only one of the images which are different in viewpoint.

### (5-7) Modification G

According to the foregoing embodiment, it is assumed that the recognition unit 66 differentiates a type of refrigerant used in a target product, based on the refrigerant type indications S12 and S22 respectively provided on the outdoor units E1 and E2. For example, it may be considered that the outdoor units E1 and E2 are not provided with the refrigerant type indications S12 and S22, respectively, or the recognition unit 66 is incapable of recognizing the refrigerant type indications S12 and S22 from an image.

In view of this, for example, if the recognition unit 66 is capable of differentiating a type of refrigerant used in the product when at least one of a maker, a model, and a year of manufacture is identified as to a product, the recognition unit 66 may differentiate the type of refrigerant used in the product, based on the maker, the model, or the year of manufacture of the product identified from image data.

### (5-8) Modification H

The recognition unit 66 recognizes an image of a target product in image data with a plurality of deterioration levels. The recognition unit 66 does not necessarily differentiate the image with the plurality of deterioration levels, but may simply differentiate the image with only presence or absence of deterioration.

### INDUSTRIAL APPLICABILITY

The present invention is useful as a product information preparation system that can locate a product even when the management of the product is not previously commissioned, and readily makes, for example, a suggestion to perform maintenance of the product.

### REFERENCE SIGNS LIST

64: acquisition unit
66: recognition unit
68: preparation unit
100: information preparation system
G1: first image (image of landscape captured from above)
G2: second image (image of landscape captured sidewise)
L: product information list (product information)
M: product installation position distribution map (product information)
S11, S12: logo (recognition indication)
T1a, T1b, T1c, T2: image of target product (image of target product in image data)

### CITATION LIST

### PATENT LITERATURE

Patent Literature 1: JP 2005-196341 A

## Claims

1. A product information preparation system (100) comprising:
an acquisition unit (64) configured to acquire image data on a landscape, the image data being correlated with position information;
a recognition unit (66) configured to recognize an image (T1a, T1b, T1c, T2) of a target product in the image data acquired by the acquisition unit; and
a preparation unit (68) configured to identify a position where the target product recognized by the recognition unit is installed, based on the position information correlated with the image data and to prepare product information (L, M) on the target product, the product information containing information on the position where the target product is installed, wherein
the target product is a device constituting at least a part of a refrigeration apparatus that causes a refrigerant to circulate through refrigerant circuit, and
the preparation unit is configured to prepare the product information on the target product classified according to the refrigerant,
and wherein the information preparation system (100) comprises a server (5), the server (50) including a communication unit (52), an input unit (54), an output unit (56), a storage unit (58) and a processing unit (60), wherein the processing unit (60) is configured to execute programs stored in the storage unit (58), thereby functioning as a learning unit (62), as the acquisition unit (64), as the recognition unit (66) and as the preparation unit (68), wherein
the learning unit (62) is configured to learn from learning images provided with teaching labels, the teaching labels providing information on the target product including the refrigerant type used, so as to construct an image recognition algorithm by machine learning, the image recognition algorithm being designed such that the recognition unit (66) recognizes that products are different in type from one another when the products are different from one another as to at least the used refrigerant,
and wherein the recognition unit (66) is configured to recognize the images of the target products in the image data with differentiating the refrigerant used in each target product.

2. The product information preparation system according to claim 1, wherein
the image data includes an image (G1) of a landscape captured from above and/or an image (G2) of a landscape captured sidewise.

3. The product information preparation system according to claim 1 or 2, wherein
the recognition unit is configured to recognize the image of the target product in the image data, based on at least one of an appearance of the target product and a recognition indication (S11, S12) provided on the target product.

4. The product information preparation system according to any one of claims 1 to 3, wherein
the preparation unit is configured to prepare a product installation position distribution map (M) as the product information containing the information on the position where the target product is installed.

5. The product information preparation system according to any one of claims 1 to 4, wherein
the recognition unit is configured to recognize the image of the target product in the image data with differentiating with at least one of items including a maker, a model, and a year of manufacture, and
the preparation unit is configured to prepare the product information on the target product classified according to at least one of the items.

6. The product information preparation system according to any one of claims 1 to 5, wherein
the recognition unit is configured to recognize the image of the target product in the image data with differentiating by a deterioration level, and
the preparation unit is configured to prepare the product information on the target product classified according to the deterioration level.

7. The product information preparation system according to any one of claims 1 to 6, wherein
the recognition unit is configured to recognize the image of the target product in the image data with differentiating by a deterioration type, and
the preparation unit is configured to prepare the product information on the target product classified according to the deterioration type.

8. The product information preparation system according to any one of claims 1 to 7, wherein
the product information is updated and prepared at predetermined timing.

## Patentansprüche

1. Produktinformationserstellungssystem (100), umfassend:
eine Erfassungseinheit (64), die ausgelegt ist, um Bilddaten bezüglich einer Ansicht zu erfassen, wobei die Bilddaten mit Positionsinformationen verknüpft sind;
eine Erkennungseinheit (66), die ausgelegt ist, um ein Bild (T1a, T1b, T1c, T2) eines Zielprodukts in den durch die Erfassungseinheit erfassten Bilddaten zu erkennen; und
eine Erstellungseinheit (68), die ausgelegt ist, um basierend auf den mit den Bilddaten verknüpften Positionsinformationen eine Position zu identifizieren, an der das von der Erkennungseinheit erkannte Zielprodukt installiert ist, und Produktinformationen (L, M) bezüglich des Zielprodukts zu erstellen, wobei die Produktinformationen Informationen zu der Position, an der das Produkt installiert ist, enthalten, wobei das Zielprodukt eine Vorrichtung ist, die mindestens einen Teil einer Kälteanlage darstellt, die bewirkt, dass ein Kältemittel durch einen Kältemittelkreislauf zirkuliert, und
die Erstellungseinheit ausgelegt ist, um die Produktinformationen bezüglich des Zielprodukts, klassifiziert je nach dem Kältemittel, zu erstellen, und wobei das Informationserstellungssystem (100) einen Server (5) umfasst, der Server (50) eine Kommunikationseinheit (52), eine Eingabeeinheit (54), eine Ausgabeeinheit (56), eine Speichereinheit (58) und eine Verarbeitungseinheit (60) beinhaltet, wobei die Verarbeitungseinheit (60) ausgelegt ist, um in der Speichereinheit (58) gespeicherte Programme auszuführen und dadurch als Lerneinheit (62), als die Erfassungseinheit (64), als die Erkennungseinheit (66) und als die Erstellungseinheit (68) funktioniert, wobei die Lerneinheit (62) ausgelegt ist, um von mit Trainingskennzeichnungen versehenen Lernbildern zu lernen, wobei die Trainingskennzeichnungen Informationen bezüglich des Zielprodukts bereitstellen, die die Art des genutzten Kältemittels beinhalten, sodass durch maschinelles Lernen ein Bilderkennungsalgorithmus aufgebaut wird, wobei der Bilderkennungsalgorithmus derart ausgestaltet ist, dass die Erkennungseinheit (66) erkennt, dass Produkte sich im Typ voneinander unterscheiden, wenn sich die Produkte zumindest im Hinblick auf das genutzte Kältemittel voneinander unterscheiden,
und wobei die Erkennungseinheit (66) ausgelegt ist, um die Bilder der Zielprodukte in den Bilddaten unter Differenzierung des in jedem Zielprodukt genutzten Kältemittels zu erkennen.

2. Produktinformationserstellungssystem nach Anspruch 1, wobei
die Bilddaten ein von oben aufgenommenes Bild (G1) einer Ansicht und/oder ein von der Seite aufgenommenes Bild (G2) einer Ansicht beinhalten.

3. Produktinformationserstellungssystem nach Anspruch 1 oder 2, wobei
die Erkennungseinheit ausgelegt ist, um das Bild des Zielprodukts in den Bilddaten basierend zumindest auf einem Erscheinungsbild des Zielprodukts und einem auf dem Zielprodukt bereitgestellten Erkennungshinweis (S11, S12) zu erkennen.

4. Produktinformationserstellungssystem nach einem der Ansprüche 1 bis 3, wobei
die Erstellungseinheit ausgelegt ist, um eine Produktinstallationspositionsverteilungskarte (M) zu erstellen, da die Produktinformationen die Informationen bezüglich der Position, an der das Zielprodukt installiert ist, enthalten.

5. Produktinformationserstellungssystem nach einem der Ansprüche 1 bis 4, wobei
die Erkennungseinheit ausgelegt ist, um das Bild des Zielprodukts in den Bilddaten unter Differenzierung mit mindestens einem der Elemente einschließend einen Hersteller, ein Modell und ein Baujahr zu erkennen, und die Erstellungseinheit ausgelegt ist, um die Produktinformationen bezüglich des Zielprodukts, klassifiziert je nach mindestens einem der Elemente, zu erstellen.

6. Produktinformationserstellungssystem nach einem der Ansprüche 1 bis 5, wobei
die Erkennungseinheit ausgelegt ist, um das Bild des Zielprodukts in den Bilddaten unter Differenzierung nach einem Abnutzungsgrad zu erkennen, und
die Erstellungseinheit ausgelegt ist, um die Produktinformationen bezüglich des Zielprodukts, klassifiziert je nach dem Abnutzungsgrad, zu erstellen.

7. Produktinformationserstellungssystem nach einem der Ansprüche 1 bis 6, wobei
die Erkennungseinheit ausgelegt ist, um das Bild des Zielprodukts in den Bilddaten unter Differenzierung nach einem Abnutzungstyp zu erkennen, und
die Erstellungseinheit ausgelegt ist, um die Produktinformationen bezüglich des Zielprodukts, klassifiziert je nach dem Abnutzungstyp, zu erstellen.

8. Produktinformationserstellungssystem nach einem der Ansprüche 1 bis 7, wobei
die Produktinformationen zu vorbestimmten Zeitpunkten aktualisiert und erstellt werden.

## Revendications

1. Système de préparation d'informations de produit (100), comprenant :
une unité d'acquisition (64) configurée pour acquérir des données d'image sur un paysage, les données d'image étant corrélées avec des informations de position ;
une unité de reconnaissance (66) configurée pour reconnaître une image (T1a, T1b, T1c, T2) d'un produit cible dans les données d'image acquises par l'unité d'acquisition ; et
une unité de préparation (68) configurée pour identifier une position où le produit cible reconnu par l'unité de reconnaissance est installé, sur la base des informations de position corrélées aux données d'image et pour préparer des informations de produit (L, M) sur le produit cible, les informations de produit contenant des informations sur la position où le produit cible est installé, dans lequel
le produit cible est un dispositif constituant au moins une partie d'un appareil de réfrigération qui fait circuler un réfrigérant à travers le circuit de réfrigérant, et
l'unité de préparation est configurée pour préparer les informations de produit sur le produit cible classé en fonction du réfrigérant,
et dans lequel le système de préparation d'informations (100) comprend un serveur (5), le serveur (50) incluant une unité de communication (52), une unité d'entrée (54), une unité de sortie (56), une unité de stockage (58) et une unité de traitement (60), dans lequel l'unité de traitement (60) est configurée pour exécuter des programmes stockés dans l'unité de stockage (58), fonctionnant ainsi comme une unité d'apprentissage (62), comme l'unité d'acquisition (64), comme l'unité de reconnaissance (66) et comme l'unité de préparation (68), dans lequel
l'unité d'apprentissage (62) est configurée pour apprendre à partir d'images d'apprentissage fournies avec des étiquettes d'enseignement, les étiquettes d'enseignement fournissant des informations sur le produit cible incluant le type de réfrigérant utilisé, de manière à construire un algorithme de reconnaissance d'image par apprentissage automatique, l'algorithme de reconnaissance d'image étant conçu de telle sorte que l'unité de reconnaissance (66) reconnaisse que les produits sont de type différent les uns des autres lorsque les produits sont différents les uns des autres au moins quant au réfrigérant utilisé,
et dans lequel l'unité de reconnaissance (66) est configurée pour reconnaître les images des produits cibles dans les données d'image en différenciant le réfrigérant utilisé dans chaque produit cible.

2. Système de préparation d'informations de produit selon la revendication 1, dans lequel
les données d'image incluent une image (G1) d'un paysage capturé par le haut et/ou une image (G2) d'un paysage capturé latéralement.

3. Système de préparation d'informations de produit selon la revendication 1 ou 2, dans lequel
l'unité de reconnaissance est configurée pour reconnaître l'image du produit cible dans les données d'image, sur la base d'au moins l'un d'un aspect du produit cible et d'une indication de reconnaissance (S11, S12) fournie sur le produit cible.

4. Système de préparation d'informations de produit selon l'une quelconque des revendications 1 à 3, dans lequel
l'unité de préparation est configurée pour préparer une carte de distribution de position d'installation de produit (M) en tant qu'informations de produit contenant les informations sur la position où le produit cible est installé.

5. Système de préparation d'informations de produit selon l'une quelconque des revendications 1 à 4, dans lequel l'unité de reconnaissance est configurée pour reconnaître l'image du produit cible dans les données d'image avec une différenciation avec au moins l'un des éléments incluant un fabricant, un modèle et une année de fabrication, et
l'unité de préparation est configurée pour préparer les informations de produit sur le produit cible classé en fonction d'au moins un des éléments.

6. Système de préparation d'informations de produit selon l'une quelconque des revendications 1 à 5, dans lequel
l'unité de reconnaissance est configurée pour reconnaître l'image du produit cible dans les données d'image avec une différenciation par un niveau de détérioration, et
l'unité de préparation est configurée pour préparer les informations de produit sur le produit cible classé en fonction du niveau de détérioration.

7. Système de préparation d'informations de produit selon l'une quelconque des revendications 1 à 6, dans lequel
l'unité de reconnaissance est configurée pour reconnaître l'image du produit cible dans les données d'image avec une différenciation par un type de détérioration, et
l'unité de préparation est configurée pour préparer les informations de produit sur le produit cible classé en fonction du type de détérioration.

8. Système de préparation d'informations de produit selon l'une quelconque des revendications 1 à 7, dans lequel
les informations de produit sont mises à jour et préparées à des moments prédéterminés.
